(19) Europäisches Patentamt
European Patent Office
Office européen des brevets

(11) **EP 4 158 852 B1**

(12) **EUROPÄISCHE PATENTSCHRIFT**

(45) Veröffentlichungstag und Bekanntmachung des Hinweises auf die Patenterteilung:
**27.05.2026 Patentblatt 2026/22**

(21) Anmeldenummer: **21721496.4**

(22) Anmeldetag: **23.04.2021**

(51) Internationale Patentklassifikation (IPC):
*H04L 43/00* (2022.01)    *H04L 43/12* (2022.01)
*H04L 12/40* (2006.01)

(52) Gemeinsame Patentklassifikation (CPC):
**H04L 12/40; H04L 43/00; H04L 43/12;**
H04L 2012/4026

(86) Internationale Anmeldenummer:
**PCT/EP2021/060731**

(87) Internationale Veröffentlichungsnummer:
**WO 2021/239350 (02.12.2021 Gazette 2021/48)**

(54) **FELDGERÄT ZUM ÜBERPRÜFEN DER QUALITÄT EINER NETZWERKVERBINDUNG**

FIELD DEVICE FOR CHECKING THE QUALITY OF A NETWORK CONNECTION

APPAREIL DE TERRAIN POUR VÉRIFIER LA QUALITÉ D'UNE CONNEXION RÉSEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2020 DE 102020114491**

(43) Veröffentlichungstag der Anmeldung:
**05.04.2023 Patentblatt 2023/14**

(73) Patentinhaber: **Endress+Hauser Process Solutions AG**
**4153 Reinach (CH)**

(72) Erfinder:
• **BÜTTNER, Karl**
**79395 Neuenburg (DE)**
• **EIDMANN, Axel**
**79541 Lörrach (DE)**
• **SPIELMANN, Benedikt**
**4053 Basel (CH)**
• **SCHAUPP, Benjamin**
**79618 Rheinfelden (DE)**
• **LOHMANN, Martin**
**70839 Gerlingen (DE)**
• **ZWICK, Oliver**
**87471 Durach (DE)**
• **FREIMARK, Harald**
**79539 Lörrach (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
**EP-A1- 3 648 416     US-A1- 2018 091 392**
**US-B1- 9 009 542**

**Beschreibung**

Die Erfindung betrifft ein Feldgerät der Automatisierungstechnik mit einer Funktion zum Überprüfen der Qualität einer Netzwerkverbindung.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zum Bedienen (bspw. Parametrieren oder Abrufen von Daten) der Feldgeräte kommen häufig mobile Bediengeräte zum Einsatz. Diese werden kabelgebunden (bspw. über eine Service-Schnittstelle) oder drahtlos (bspw. via Bluetooth) mit einem Feldgerät verbunden. Als Bediengeräte kommen beispielsweise, Laptops, mobile Endgeräte, wie Smartphones oder Tablets, oder eine zentrale Asset Management Stationen zum Einsatz.

Am Markt existieren diverse Lösungen zur Messung einzelner Parameter, die Rückschluss auf die Verbindungsqualität von Netzwerkteilnehmern oder den Status eines Netzwerks zulassen.

Als erstes Beispiel seien Netzwerkkomponenten der Firma Cisco genannt, welche einen sogenannten "Network Health Score" bestimmen. Dieser ist eine Prozentanzahl der korrekt funktionierenden ("healthy") Geräte im Netzwerk bezogen auf die Gesamtanzahl an Geräten im Netzwerk. Für jedes Gerät wird ein Gesundheitsindex berechnet. Liegt dieser zwischen 8 und 10, gilt ein Gerät als korrekt funktionierend. Dieser "Network Health Score" wird alle 5 Minuten neu berechnet (siehe auch: https://www.cisco.com/c/en/us/td/docs/cloud-systems-management/networkautomation-and-management/dna-center-assurance/1-3/b_cisco_dna_assurance_1_3_ug/b_cisco_dna_assurance_1_3_ug_chapter_0101.html#concept_f                                                      5g_rpg_bfb).

Beispiel: 90 % ("Network Health Score") = 90 (Anzahl Geräte mit Gesundheitsindex zwischen 8 und 10) / 100 (Gesamtanzahl Geräte im Netzwerk).


Als zweites Beispiel sei ein Switch der Firma Indu-Sol genannt, mittels welchem eine Ableitstromüberwachung ermöglicht ist (siehe https://www.indu-sol.com/fileadmin/user_upload/produkte/profinet/infrastrukturkomponenten/Switche/Indu-Sol_PROFINET_Switch_PROmeshP9.pdf für weitere Informationen).

In der Regel werden bei solchen Lösungen jedoch das Netzwerk als Gesamtes, oder Infrastrukturkomponenten (z.B. Switches) betrachtet. Aus Sicht eines Feldgeräts sind jedoch keine Lösungen bekannt, die die Verbindungsqualität auf einfache Art und Weise zusammenfassen.

Aus der EP 3 648 416 A1 ist ein Automatisierungsgerät bekannt geworden, welches eine integrierte Netzwerkanalyse aufweist. Aus der US 9 009 542 B1 ist ein Asset-Health-Monitoring-System bekannt geworden, welches verbundenen Computersystemen oder Netzwerkgeräten einen Vertrauensindikator zuweist. Aus der US 2018/091392 A1 ist ein System bekannt geworden, welches eine grafische Darstellung der Informationen zum Gesundheitszustand eines Netzes, das sich auf ein Kundenkonto eines Anbieternetzes bezieht, bereitstellt.

Der Erfindung liegt die Aufgabe zugrunde, ein Feldgerät vorzustellen, welches selbsttätig Aussagen über die Verbindungsqualität mit einem Kommunikationsnetzwerk treffen kann.

Die Aufgabe wird durch ein Feldgerät der Automatisierungstechnik gemäß Anspruch 1 gelöst.

Das erfindungsgemäße Feldgerät erlaubt es, auf einfache Art und Weise eine Aussage über die Verbindungsqualität mit dem Kommunikationsnetzwerk, in welchem es eingebunden ist, zu treffen. Hierfür liest das Feldgerät Kommunikationsinformationen aus, die - abhängig vom verwendeten Netzwerktyp, bzw. -protokoll - standardmäßig erfasst und gespeichert werden. Zur Interpretation dieser Kommunikationsinformationen und insbesondere zum Treffen einer Aussage werden mitunter tiefgehende protokollspezifische Kenntnisse benötigt. Das erfindungsgemäße Feldgerät verrechnet diese Kommunikationsinformationen jedoch selbstständig. Das Ergebnis, also der Kommunikationszustand, ist für Servicepersonal und Anlagenbetreiber leicht zu verstehen, so dass keine protokollspezifischen Kenntnisse erforderlich sind.

Als Kommunikationsstack wird im mit dem erfindungsgemäßen Feldgerät eine konzeptuelle Architektur von Kommunikationsprotokollen verstanden. Anschaulich sind die einzelnen Protokolle dabei als fortlaufend nummerierte Schichten (layers) eines Stapels (stacks) übereinander angeordnet. Jede Schicht benutzt dabei zur Erfüllung ihrer speziellen Aufgabe die jeweils tiefere Schicht im Protokollstapel. In diesem Kommunikationsstack werden während des Betriebs die Informationen protokollabhängig selbstständig erhoben und in einem dem Kommunikationsstack zugeordneten Datenspeicher abgelegt.

Ein PHY ist ein Begriff aus der Computer- und Nachrichtentechnik, mit dem ein spezieller integrierter Schaltkreis oder eine funktionelle Gruppe eines Schaltkreises bezeichnet wird, die für die Kodierung und Dekodierung von Daten zwischen einem rein digitalen System und einem modulierten analogen zuständig ist. PHY steht dabei für "physische Schnittstelle". Der Begriff findet sich zum Beispiel auf den Schaltplänen von Ethernetkarten. Vollintegrierte Ethernetcontroller-Bausteine haben einen sogenannten "PHYceiver" eingebaut.

Bei den Netzwerkteilnehmern handelt es sich beispielsweise um weitere Feldgeräte, aber auch um Steuerungseinheiten (bspw. SPSen), Infrastrukturkomponenten (Switches, Gateways) oder um Industrie-PCs.

Beispiele für Typen von Feldgeräte sind bereits im einleitenden Teil der Beschreibung aufgeführt worden.

Gemäß einer vorteilhaften Ausgestaltung des erfindungsgemäßen Feldgeräts ist dieses dazu ausgestaltet, den Kommunikationszustand per Kommunikationsschnittstelle einem oder mehreren der Netzwerkteilnehmer zur Verfügung zu stellen. Das Feldgerät kann den Kommunikationszustand (je nach Typ/Protokoll des Kommunikationsnetzwerks) hierbei selbstständig (gezielt an zumindest einen der Kommunikationsteilnehmer oder broadcastmäßig), oder auf Anfrage von einem der Netzwerkteilnehmer übermitteln. Es kann auch vorgesehen sein, dass das Feldgerät hierbei eine weitere Kommunikationsschnittstelle aufweist und diese dafür nutzt, den Kommunikationszustand über ein weiteres Kommunikationsnetzwerk zu übermitteln, bspw. über ein Funknetzwerk (Bluetooth, WiFi, etc.).

Gemäß einer vorteilhaften Ausgestaltung des erfindungsgemäßen Feldgeräts weist dieses eine Anzeigeeinheit auf, wobei das Feldgerät dazu ausgestaltet ist, den Kommunikationszustand - alternativ zur oben beschriebenen Ausgestaltung oder zusätzlich - über die Anzeigeeinheit auszugeben. Bei der Anzeigeeinheit handelt es sich beispielsweise um ein Display. Der Begriff Anzeigeeinheit kann aber breit ausgelegt werden, so dass unter einer Anzeigeeinheit auch ein Webserver zur Ausgabe des Kommunikationszustands oder eine Kommunikationsschnittstelle zum Abrufen des Kommunikationszustands durch Bedieneinheiten verstanden werden kann.

Gemäß einer vorteilhaften Ausgestaltung des erfindungsgemäßen Feldgeräts ist vorgesehen, dass das Kommunikationsnetzwerk ein Ethernet-basiertes Netzwerk ist, insbesondere Modbus TCP, PROFINET, EtherNet/IP oder OPC UA. Es versteht sich von selbst, dass auch weitere Netzwerktypen/-protokolle verwendet werden können, welche das Erfassen und Generieren von Kommunikationsinformationen standardmäßig vorsehen.

Gemäß einer vorteilhaften Ausgestaltung des erfindungsgemäßen Feldgeräts ist vorgesehen, dass die Kommunikationsinformationen die folgenden umfassen:

- Einen Status, ob eine Kommunikationsverbindung über die zumindest eine Kommunikationsschnittstelle, oder, falls vorhanden, über mehrere Kommunikationsschnittstellen, aufgebaut ist oder nicht;
- Eine Anzahl der von der Kommunikationsschnittstelle empfangenen Bytes;
- Eine Anzahl der Byte-Empfangsfehler;
- Eine Anzahl der von der Kommunikationsschnittstelle übertragenen, bzw. ausgesendeten Bytes;
- Eine Anzahl der Byte-Übertragungsfehler;
- Eine Anzahl der aktiven TCP-Verbindungen;
- Eine Anzahl der empfangenen TCP-Frames;
- Eine Anzahl der TCP-Frame-Empfangsfehler;
- Eine Anzahl der übertragenen TCP-Rahmenpakete;
- Eine Anzahl der TCP-Frame-Übertragungsfehler;
- Eine Anzahl der verfügbaren UDP-Ports;
- Eine Anzahl der empfangenen UDP-Rahmenpakete;
- Eine Anzahl der Empfangsfehler der UDP-Rahmenpakete;
- Eine Anzahl der übertragenen UDP-Rahmenpakete;
- Eine Anzahl der Übertragungsfehler der UDP-Rahmenpakete;
- Ein Application Relation(AR)-Status;

- Eine Information bezüglich der ungefähren Netzlast der eingehenden Daten, bzw. Pakete;
- Eine Information bezüglich der ungefähren Netzlast der ausgehenden Daten, bzw. Pakete.

Diese Kommunikationsinformationen lassen sich in protokollspezifische Kommunikationsinformationen und in Portdiagnostikinformationen einteilen. Protokollspezifische Kommunikationsinformationen (bspw. TCP- oder UDP-bezogene Informationen; Netzlast im Falle von PROFINET) liegen nicht für alle Protokolltypen, sondern nur für bestimmte Protokolle vor. Die Portdiagnostikinformationen liegen in der Regel für alle Protokolltypen vor und beinhalten allgemeine Informationen über gesendete/empfangene Bytes, des Signallevels, des Signal-to-Noise-Ratios und werden beispielsweise von dem PHY erhoben.

Diese genannten Kommunikationsinformationen liegen als Zahlenwerte vor und werden ggf. normiert (bspw. in Prozentwerte umgerechnet), damit diese auf einfache Art und Weise von dem Algorithmus verrechnet werden können.

Die Erfindung wird anhand der nachfolgenden Figur näher erläutert. Es zeigt

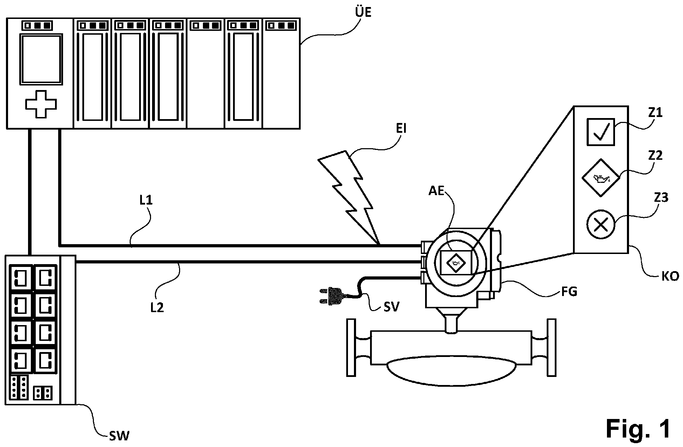

Fig. 1: ein Ausführungsbeispiel des erfindungsgemäßen Feldgeräts, welches in ein Kommunikationsnetzwerk integriert ist.

In Fig. 1 ist ein Feldgerät FG abgebildet. Dieses dient beispielsweise dem Erfassen einer Strömungsgeschwindigkeit eines fluiden Messmediums in einer Rohrleitung. Es kann sich jedoch um einen beliebig anderen Typ Feldgerät handeln, wie er im einleitenden Teil der Beschreibung beispielhaft aufgeführt ist.

Das Feldgerät FG ist über zwei Verbindungsleitungen L1, L2 in einem Kommunikationsnetzwerk eingebunden. Die Verbindungsleitungen L1, L2 bilden hier eine Ringtopologie. Der später berechnete Kommunikationszustand KO ermöglicht beispielsweise das Feststellen, ob die Ringtopologie aufgebrochen ist oder das Netzwerksystem korrekt funktioniert.

Für den Anschluss des Feldgeräts FG an das Netzwerk reicht allerdings auch nur der Anschluss an eine der beiden Verbindungsleitungen L1, L2 aus. Es kann daher alternativ vorgesehen sein, dass das Feldgerät nur an eine der beiden Verbindungsleitungen L1, L2 angeschlossen ist. Im vorliegenden Beispiel verwendet dieses das Protokoll PROFINET. Die Verbindungsleitungen L1, L2 sind mit der Kommunikationsschnittstelle des Feldgeräts FG verbunden. Je nach Netzwerktyp wird das Feldgerät FG über die Verbindungsleitungen L1, L2, oder über eine separater Stromversorgung SV mit seiner zum Betrieb benötigten elektrischen Energie versorgt.

Weitere Netzwerkteilnehmer neben den Feldgerät sind eine übergeordnete Einheit ÜE, in diesem Fall eine SPS, welche Messwerte des Feldgeräts FG abfragt, sowie ein Switch SW, welcher als Infrastrukturkomponente weitere, nicht abgebildete, Segmente des Kommunikationsnetzwerks verbindet.

Während des Betriebs erhebt die Kommunikationsschnittstelle des Feldgeräts FG laufend Kommunikationsinformationen, welche eine Beurteilung über die Verbindungsperformance des Feldgeräts FG im Kommunikationsnetzwerk erlauben. Hierfür ist der Kommunikationsschnittstelle jeweils ein Kommunikationsstack und ein PHY zugeordnet, welche diese Aufgaben durchführen. In regelmäßigen Zeitabständen, oder auf Initiative eines Benutzers, bzw. auf Abfrage durch einen der Netzwerkteilnehmer NT greift die Betriebselektronik des Feldgeräts FG auf den Kommunikationsstack und auf den PHY zu, um die dort gespeicherten Kommunikationsinformationen auszulesen. Der Betriebselektronik ist ein Algorithmus zugeordnet, welcher die ausgelesenen Kommunikationsinformationen verrechnet und einen Kommunikationszustand KO berechnet.

Die Berechnung des Kommunikationszustands KO erfolgt über den Algorithmus. Dieser wendet eine mathematische Formel an, um die einzelnen Kommunikationsinformationen zu verrechnen. Hierfür gibt es mehrere Möglichkeiten:

1). Es wird der Mittelwert über alle Kommunikationsinformationen gebildet. Hierbei besitzen alle Kommunikationsinformationen den gleichen Gewichtungsfaktor.

2.) Es wird eine gewichtete Formel verwendet, in der die einzelnen Kommunikationsinformationen spezifische Gewichtungsfaktoren erhalten. Beispielsweise erhalten UDP-spezifische Kommunikationsinformationen hohe Gewichtungsfaktoren, da diese zyklische Telegramme betreffen und daher wichtig sind, um einen korrekt funktionierenden Prozess sicherzustellen.

Zusätzlich oder alternativ zu 1.) oder 2.) können Grenzwerte für einzelne Kommunikationsinformationen festgelegt werden. Werden diese, je nach Typ, unter- oder überschritten, so wird der schlechtmögliche Status gewählt, unabhängig von den Werten der anderen Kommunikationsinformationen. Ein Beispiel ist die Kommunikationsinformation "Status, ob eine Kommunikationsverbindung über die Kommunikationsschnittstelle aufgebaut ist oder nicht". Ist keine Kommunikationsinformation aufgebaut, so wird defaultmäßig der schlechtmögliche Status gewählt.

3.) Der Algorithmus basiert auf einem KI-Modell, bspw. einem Deep Learning-Modell oder einem neuronalen Netzwerk, welches vorab mittels Trainingsdaten auf die drei Zustände Z1, Z2, Z3 eingelernt wird und mitunter kleine Nuancen in den Kommunikationsinformationen erkennen kann, um den korrekten Zustand Z1, Z2, Z3 zu erkennen. Der Algorithmus kann hierbei eine Feedback-Funktion aufweisen: Wird beispielsweise der schlechtestmögliche Zustand Z3 berechnet, aber die Verbindung funktioniert einwandfrei, so kann dies dem Algorithmus als Feedback mitgeteilt werden. Der Algorithmus lernt von diesen Erfahrungen und verbessert sich über die Betriebszeit.

Der berechnete Kommunikationszustand KO liegt als Zahlenwert vor Abhängig von der Größe des Kommunikationszustands KO wird dieser in einen von drei Zuständen Z1, Z2, Z3 klassifiziert. Die Trennwerte, ab welchen ein jeweiliger Zustand erreicht ist, sind standardmäßig in dem Feldgerät FG gespeichert, lassen sich aber von einem Benutzer editieren. Zustand Z1 ist der bestmögliche Fall und bedeutet "Kommunikation in Ordnung - Good". Zustand Z2 bedeutet "Kommunikation beeinträchtigt - Maintenance required". Zustand Z3 ist der schlechtmögliche Zustand und bedeutet "Kommunikation gestört - Maintenance demanded".

Der Kommunikationszustand KI, bzw. der jeweilige Zustand Z1, Z2, Z3 lässt sich über die Anzeigeeinheit AE des Feldgeräts FG ablesen. Beispielsweise ist ein spezieller Menüeintrag vorhanden, über welchen der Kommunikationszustand auswählbar und ablesbar ist. Es kann auch vorgesehen sein, den Kommunikationszustand KO per Kommunikationsschnittstelle für die Netzwerkteilnehmer ÜE, SW verfügbar zu machen, oder über eine weitere Kommunikationsschnittstelle, bspw. eine Funkschnittstelle, weiteren Geräten, bspw. Bediengeräten, welche die von der Anmelderin entwickelte App "SmartBlue" nutzen, verfügbar zu machen.

Die Berechnung des Kommunikationszustands KO erfolgt über den Algorithmus. Dieser wendet eine mathematische Formel an, um die einzelnen Kommunikationsinformationen zu verrechnen. Hierfür gibt es mehrere Möglichkeiten:

1). Es wird der Mittelwert über alle Kommunikationsinformationen gebildet. Hierbei besitzen alle Kommunikationsinformationen den gleichen Gewichtungsfaktor.

2.) Es wird eine gewichtete Formel verwendet, in der die einzelnen Kommunikationsinformationen spezifische Gewichtungsfaktoren erhalten. Beispielsweise erhalten UDP-spezifische Kommunikationsinformationen hohe Gewichtungsfaktoren, da diese zyklische Telegramme betreffen und daher wichtig sind, um einen korrekt funktionierenden Prozess sicherzustellen.

Zusätzlich oder alternativ zu 1.) oder 2.) können Grenzwerte für einzelne Kommunikationsinformationen festgelegt werden. Werden diese, je nach Typ, unter- oder überschritten, so wird der schlechtmögliche Status gewählt, unabhängig von den Werten der anderen Kommunikationsinformationen. Ein Beispiel ist die Kommunikationsinformation "Status, ob eine Kommunikationsverbindung über die Kommunikationsschnittstelle aufgebaut ist oder nicht". Ist keine Kommunikationsinformation aufgebaut, so wird defaultmäßig der schlechtmögliche Status gewählt.

3.) Der Algorithmus basiert auf einem KI-Modell, bspw. einem Deep Learning-Modell oder einem neuronalen Netzwerk, welches vorab mittels Trainingsdaten auf die drei Zustände Z1, Z2, Z3 eingelernt wird und mitunter kleine Nuancen in den Kommunikationsinformationen erkennen kann, um den korrekten Zustand Z1, Z2, Z3 zu erkennen. Der Algorithmus kann hierbei eine Feedback-Funktion aufweisen: Wird beispielsweise der schlechtestmögliche Zustand Z3 berechnet, aber die Verbindung funktioniert einwandfrei, so kann dies dem Algorithmus als Feedback mitgeteilt werden. Der Algorithmus lernt von diesen Erfahrungen und verbessert sich über die Betriebszeit.

Der berechnete Kommunikationszustand KO liegt als Zahlenwert vor Abhängig von der Größe des Kommunikationszustands KO wird dieser in einen von drei Zuständen Z1, Z2, Z3 klassifiziert. Die Trennwerte, ab welchen ein jeweiliger Zustand erreicht ist, sind standardmäßig in dem Feldgerät FG gespeichert, lassen sich aber von einem Benutzer editieren. Zustand Z1 ist der bestmögliche Fall und bedeutet "Kommunikation in Ordnung - Good". Zustand Z2 bedeutet "Kommunikation beeinträchtigt - Maintenance required". Zustand Z3 ist der schlechtmögliche Zustand und bedeutet "Kommunikation gestört - Maintenance demanded".

Der Kommunikationszustand KI, bzw. der jeweilige Zustand Z1, Z2, Z3 lässt sich über die Anzeigeeinheit AE des Feldgeräts FG ablesen. Beispielsweise ist ein spezieller Menüeintrag vorhanden, über welchen der Kommunikationszustand auswählbar und ablesbar ist. Es kann auch vorgesehen sein, den Kommunikationszustand KO per Kommunikationsschnittstelle für die Netzwerkteilnehmer ÜE, SW verfügbar zu machen, oder über eine weitere Kommunikationsschnittstelle, bspw. eine Funkschnittstelle, weiteren Geräten, bspw. Bediengeräten, welche die von der Anmelderin entwickelte App "SmartBlue" nutzen, verfügbar zu machen.

**Bezugszeichenliste**

| AE | Anzeigeeinheit |
| EI | Externer Einfluss |
| FG | Feldgerät |

KO          Kommunikationszustand
L1, L2      Verbindungsleitungen
SV          Stromversorgung
SW          Switch, Netzwerkteilnehmer
ÜE          Übergeordnete Einheit, Netzwerkteilnehmer
Z1, Z2, Z3  Zustände

**Patentansprüche**

1.  Feldgerät (FG) der Automatisierungstechnik mit einer Funktion zum Überprüfen der Qualität einer Netzwerkverbindung, wobei das Feldgerät (FG) über eine Betriebselektronik und über zumindest eine Kommunikationsschnittstelle zum Anschluss an ein Kommunikationsnetzwerk mit einem oder mehreren Netzwerkteilnehmern (SW, ÜE) und zum Aufbau einer Kommunikationsverbindung aufweist, wobei der Kommunikationsschnittstelle ein Kommunikationsstack und ein PHY zugeordnet ist, wobei der Kommunikationsstack und der PHY dazu ausgestaltet sind, laufend eine Vielzahl von Kommunikationsinformationen bezüglich der Kommunikationsverbindung zu erheben und zu speichern, wobei die Betriebselektronik dazu ausgestaltet ist, die Kommunikationsinformationen aus dem Kommunikationsstack und aus dem PHY auszulesen, und mittels eines Algorithmus zu verrechnen und basierend auf dem Ergebnis des Verrechnens einen Kommunikationszustand (KO) zu klassifizieren, wobei die Kommunikationsinformationen Portdiagnostikinformationen umfassen, welche Portdiagnostikinformationen allgemeine Informationen über gesendete und empfangene Bytes, bezüglich eines Signallevels und bezüglich eines Signal-to-Noise-Ratios beinhalten, wobei die Kommunikationsinformationen als Zahlenwerte vorliegen, wobei der Kommunikationszustand (KO) als Zahlenwert vorliegt und abhängig von der Größe des Kommunikationszustands (KO) in einen von drei Zuständen (Z1, Z2, Z3) klassifiziert ist, wobei Trennwerte, ab welchen ein jeweiliger Zustand (Z1, Z2, Z3) erreicht ist, in dem Feldgerät (FG) gespeichert sind.

2.  Feldgerät (FG) nach Anspruch 1, wobei das Feldgerät (FG) dazu ausgestaltet ist, den Kommunikationszustand (KO) per Kommunikationsschnittstelle einem oder mehreren der Netzwerkteilnehmer (SW, ÜE) zur Verfügung zu stellen.

3.  Feldgerät (FG) nach Anspruch 1 oder 2, wobei das Feldgerät (FG) eine Anzeigeeinheit (AE) aufweist und wobei das Feldgerät (FG) dazu ausgestaltet ist, den Kommunikationszustand (KO) über die Anzeigeeinheit (AE) auszugeben.

4.  Feldgerät (FG) nach zumindest einem der vorherigen Ansprüche, wobei das Kommunikationsnetzwerk ein Ethernet-basiertes Netzwerk ist, insbesondere Modbus TCP, PROFINET oder EtherNet/IP.

5.  Feldgerät (FG) nach zumindest einem der vorherigen Ansprüche, wobei die Kommunikationsinformationen die folgenden umfassen:

    - Einen Status, ob eine Kommunikationsverbindung über die Kommunikationsschnittstelle aufgebaut ist oder nicht;
    - Einen Status, ob eine Ringverbindung aufgebaut ist;
    - Eine Anzahl der von der Kommunikationsschnittstelle empfangenen Bytes;
    - Eine Anzahl der Byte-Empfangsfehler;
    - Eine Anzahl der von der Kommunikationsschnittstelle übertragenen, bzw. ausgesendeten Bytes;
    - Eine Anzahl der Byte-Übertragungsfehler;
    - Eine Anzahl der aktiven TCP-Verbindungen;
    - Eine Anzahl der empfangenen TCP-Frames;
    - Eine Anzahl der TCP-Frame-Empfangsfehler;
    - Eine Anzahl der übertragenen TCP-Rahmenpakete;
    - Eine Anzahl der TCP-Frame-Übertragungsfehler;
    - Eine Anzahl der verfügbaren UDP-Ports;
    - Eine Anzahl der empfangenen UDP-Rahmenpakete;
    - Eine Anzahl der Empfangsfehler der UDP-Rahmenpakete;
    - Eine Anzahl der übertragenen UDP-Rahmenpakete;
    - Eine Anzahl der Übertragungsfehler der UDP-Rahmenpakete;
    - Ein Application Relation-Status;
    - Eine Information bezüglich der ungefähren Netzlast der eingehenden Daten, bzw. Pakete; und/oder
    - Eine Information bezüglich der ungefähren Netzlast der ausgehenden Daten, bzw. Pakete.

Claims

1.  **Field device (FD) of automation technology** having a function for checking the quality of a network connection, wherein the field device (FD) comprises operating electronics and at least one communication interface for connection to a communication network with one or more network participants (SW, UE) and for establishing a communication connection, wherein a communication stack and a PHY are assigned to the communication interface,

    wherein the communication stack and the PHY are designed to continuously collect and store a plurality of communication information relating to the communication connection,
    wherein the operating electronics are designed to read the communication information from the communication stack and from the PHY and to calculate the communication information by means of an algorithm, and, based on the calculation result, to classify a communication state (CS),
    wherein the communication information comprises port diagnostic information, said port diagnostic information including general information relating to transmitted and received bytes, signal level, and signal-to-noise ratio,
    wherein the communication information is present as numerical values,
    wherein the communication state (CS) is present as a numerical value and, depending on the magnitude of the communication state (CS), is classified into one of three states (S1, S2, S3), and wherein threshold values defining when a respective state (S1, S2, S3) is reached are stored in the field device (FD).

2.  **Field device (FD) according to claim 1,** wherein the field device (FD) is designed to provide the communication state (CS) via the communication interface to one or more of the network participants (SW, UE).

3.  **Field device (FD) according to claim 1 or 2,** wherein the field device (FD) comprises a display unit (DU) and wherein the field device (FD) is designed to output the communication state (CS) via the display unit (DU).

4.  **Field device (FD) according to at least one of the preceding claims,** wherein the communication network is an Ethernet-based network, in particular Modbus TCP, PROFINET, or EtherNet/IP.

5.  **Field device (FD) according to at least one of the preceding claims,** wherein the communication information comprises the following:

    • a status indicating whether a communication connection is established via the communication interface or not;
    • a status indicating whether a ring connection is established;
    • a number of bytes received by the communication interface;
    • a number of byte reception errors;
    • a number of bytes transmitted or sent by the communication interface;
    • a number of byte transmission errors;
    • a number of active TCP connections;
    • a number of received TCP frames;
    • a number of TCP frame reception errors;
    • a number of transmitted TCP frames;
    • a number of TCP frame transmission errors;
    • a number of available UDP ports;
    • a number of received UDP frames;
    • a number of UDP frame reception errors;
    • a number of transmitted UDP frames;
    • a number of UDP frame transmission errors;
    • an application relation status;
    • information regarding the approximate network load of incoming data or packets; and/or
    • information regarding the approximate network load of outgoing data or packets.

Revendications

1.  **Appareil de terrain (AT) de la technologie d'automatisation** comprenant une fonction de vérification de la qualité d'une connexion réseau, l'appareil de terrain (AT) comprenant une électronique de fonctionnement et au moins une interface de communication destinée à être connectée à un réseau de communication avec un ou plusieurs participants au réseau (SW, UE) et à établir une connexion de communication,

**EP 4 158 852 B1**

une pile de communication et un PHY étant associés à l'interface de communication,
la pile de communication et le PHY étant conçus pour relever et mémoriser en continu une pluralité d'informations de communication relatives à la connexion de communication, l'électronique de fonctionnement étant conçue pour lire les informations de communication à partir de la pile de communication et du PHY et pour les traiter au moyen d'un algorithme, et pour classifier un état de communication (EC) sur la base du résultat du traitement, les informations de communication comprenant des informations de diagnostic de port, lesquelles informations de diagnostic de port comprennent des informations générales relatives aux octets transmis et reçus, au niveau du signal et au rapport signal-bruit,
les informations de communication étant présentes sous forme de valeurs numériques, l'état de communication (EC) étant présent sous forme de valeur numérique et étant classé, en fonction de la grandeur de l'état de communication (EC), dans l'un de trois états (E1, E2, E3), des valeurs seuils définissant l'atteinte d'un état respectif (E1, E2, E3) étant mémorisées dans l'appareil de terrain (AT).

2. **Appareil de terrain (AT) selon la revendication 1,** dans lequel l'appareil de terrain (AT) est conçu pour mettre l'état de communication (EC) à disposition d'un ou de plusieurs participants au réseau (SW, UE) via l'interface de communication.

3. **Appareil de terrain (AT) selon la revendication 1 ou 2,** dans lequel l'appareil de terrain (AT) comporte une unité d'affichage (UA) et dans lequel l'appareil de terrain (AT) est conçu pour afficher l'état de communication (EC) via l'unité d'affichage (UA).

4. **Appareil de terrain (AT) selon au moins l'une des revendications précédentes,** dans lequel le réseau de communication est un réseau de type Ethernet, notamment Modbus TCP, PROFINET ou EtherNet/IP.

5. **Appareil de terrain (AT) selon au moins l'une des revendications précédentes,** dans lequel les informations de communication comprennent les éléments suivants :

   • un état indiquant si une connexion de communication est établie via l'interface de communication ou non ;
   • un état indiquant si une connexion en anneau est établie ;
   • un nombre d'octets reçus par l'interface de communication ;
   • un nombre d'erreurs de réception d'octets ;
   • un nombre d'octets transmis ou envoyés par l'interface de communication ;
   • un nombre d'erreurs de transmission d'octets ;
   • un nombre de connexions TCP actives ;
   • un nombre de trames TCP reçues ;
   • un nombre d'erreurs de réception de trames TCP ;
   • un nombre de trames TCP transmises ;
   • un nombre d'erreurs de transmission de trames TCP ;
   • un nombre de ports UDP disponibles ;
   • un nombre de trames UDP reçues ;
   • un nombre d'erreurs de réception de trames UDP ;
   • un nombre de trames UDP transmises ;
   • un nombre d'erreurs de transmission de trames UDP ;
   • un état de relation applicative ;
   • une information relative à la charge réseau approximative des données ou paquets entrants ; et/ou
   • une information relative à la charge réseau approximative des données ou paquets sortants.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3648416 A1
- US 9009542 B1
- US 2018091392 A1